Europäisches Patentamt

European Patent Office

Office européen des brevets

(19)

(11) Publication number : **0 411 773 B1**

# EUROPEAN PATENT SPECIFICATION

(12)

(45) Date of publication of patent specification :
02.03.94 Bulletin 94/09

(51) Int. Cl.⁵ : **B60C 11/04**

(21) Application number : **90307482.1**

(22) Date of filing : **09.07.90**

(54) **Pneumatic tire with higher drainage performance.**

(30) Priority : **02.08.89 JP 199467/89**

(43) Date of publication of application :
**06.02.91 Bulletin 91/06**

(45) Publication of the grant of the patent :
**02.03.94 Bulletin 94/09**

(84) Designated Contracting States :
**DE FR GB IT LU**

(56) References cited :
**EP-A- 0 153 899**
**CH-A- 518 193**
**GB-A- 2 046 188**
**US-A- 4 284 115**

(73) Proprietor : **Bridgestone Corporation**
**1-1, Kyobashi 1-Chome Chuo-Ku**
**Tokyo 104 (JP)**

(72) Inventor : **Kawabata, Misao**
**828-13 Kamiarai**
**Tokorazawa-shi, Saitama-ken (JP)**
Inventor : **Ushikubo, Hisao**
**110-3-403 Hanakoganei, 6-chome**
**Kodaira-shi, Tokyo (JP)**

(74) Representative : **Whalley, Kevin et al**
**MARKS & CLERK 57/60 Lincoln's Inn Fields**
**London WC2A 3LS (GB)**

## Description

The present invention relates to a pneumatic tire with improved drainage performance, and more specifically to a pneumatic, tire formed with a unidirectional tread pattern having improved drainage performance and therefore effective in high speed vehicle travelling, in particular.

Drainage performance is one of important performances required for high speed pneumatic tires. To improve the drainage performance, conventionally a specific unidirectional tread pattern has been adopted for the pneumatic tire by determining the rotative direction of the tire.

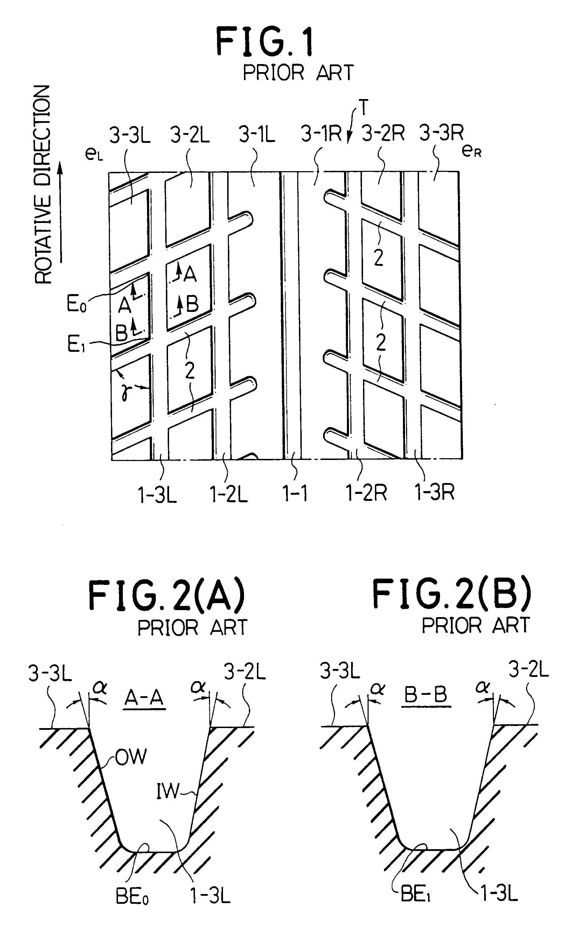

Fig. 1 shows an example of a unidirectional herringbone tread pattern used for the high speed pneumatic tires. As shown, the tread T thereof is formed with a central main circumferential groove 1-1, a plurality (four) of parallel circumferential grooves 1-2R, 1-2L, 1-3R, and 1-3L arranged on both sides of the central main groove 1-1 at predetermined intervals, and a number of inclined transverse grooves 2 arranged at regular intervals along the tire circumference so as to intersect the circumferential grooves 1-2R,L and 1-3R,L at an acute inclination angle into a herringbone pattern along the tire rotative direction as shown in Fig. 1. Therefore, when the tire is rotating, the transverse grooves 2 are brought into contact with the ground from the central portion thereof to the tread end portions thereof to effectively drain water on the tire tread along the transverse grooves in the direction opposite to the predetermined tire rotative direction (the tire reverse rotative direction).

Further, two middle ribs 3-1R and 3-1L are formed between the central main circumferential groove 1-1 and the two axially inward circumferential grooves 1-2R,1-2L. respectively; two intermediate block rows 3-2R and 3-2L are formed between the two axially inward circumferential grooves 1-2R, 1-2L and the axially outward circumferential grooves 1-3R, 1-3L respectively; and two shoulder block rows 3-3R and 3-3L are formed between the two axially outward circumferential grooves 3-3R, 3-3L and two tread ends eR, eL, respectively. Further, in general, the depths of the circumferential grooves 1-1 to 1-3R, L are deeper than that of the transverse grooves 2.

In the prior-art pneumatic tire having a unidirectional herringbone tread pattern as described above, the cross section of each of the circumferential grooves 1 is formed symmetrical with respect to the central line of each circumferential groove. In more detail, as shown in Figs. 2(A) and 2(B), the inclination angle or the downward slope angle $\alpha$ between the normal line of the tire tread surface and the axially outward side wall surface OW of the circumferential groove, for example, is substantially equal to that $\alpha$ between the normal line and the axially inward side wall surface IW along the circumferential groove, and therefore the bottom $BE_\emptyset$ of the circumferential groove is located at the center of the circumferential groove at both the circumferentially frontward end $E_\emptyset$ and the circumferentially backward ends $E_1$ (shown in Fig. 1), as depicted in Figs. 2(A) and 2(B).

Therefore, water on the tire tread which is in contact with the ground during travelling is guided along the transverse grooves 2 and the circumferential grooves 1-2 and 1-3, and then drained mainly from the circumferential grooves 1-2 and 1-3 in the tire tangential direction. In the prior-art pneumatic tire, however, since water on the tire tread is drained mainly in the tire tangential direction, there exist various problems in that the drainage performance is not high; the travelling resistance increases due to water drained in the tire frontward direction; the rotative resistance decreases due to water drained in the tire backward direction; and therefore the vehicle speed at which hydroplaning phenomenon occurs is reduced.

With an increase in vehicle driving power and increased networks of speedways, higher performance vehicles are required more and more, so that there exists a strong demand for pneumatic tires provided with higher drainage performance when the vehicle is running at high speed on a speedway in rainy weather.

With these problems in mind, therefore, it is the aim of the present invention to provide a pneumatic tire with improved drainage performance during high speed travelling.

To achieve the above-mentioned aim, a pneumatic tire, according to the present invention, has a unidirectional tread pattern formed with a plurality of substantially straight circumferential grooves and a plurality of transverse grooves arranged so as to intersect the said circumferential grooves at an acute inclination angle to form a herringbone pattern along a tire rotative direction, wherein at least one said substantially straight circumferential groove is formed such that a bottom of said circumferential groove is offset axially outwardly from a central line of said circumferential groove along a tire reverse rotative direction, between two circumferential groove ends intersected by two adjacent transverse grooves.

Further, it is also preferable that the at least one said substantially straight circumferential groove is formed by further offsetting the bottom of said circumferential groove axially inwardly from the central line of said circumferential groove along the tire rotative direction, between the two circumferential groove ends intersected by the two adjacent transverse grooves.

A first downward slope angle $\alpha$ between a normal line of a tread surface and an axially outward side wall surface of the circumferential groove decreases gradually and a second downward slope angle $\beta$ between the

2

normal line of the tread surface and an axially inward side wall surface of the circumferential groove increases gradually, both in the tire reverse rotative direction, between the two circumferential groove ends intersected by the two adjacent transverse grooves. Further, a difference $(\alpha_A-\alpha_B)$ or $(\beta_B- \beta_A)$ in the first or second slope angle $\alpha$ or $\beta$ of the axially outward or inward side wall surface of the circumferential groove lies within a range of 5 to 30 degrees.

In the pneumatic tire according to the present invention, since the bottom of the circumferential groove is offset axially outwardly from the circumferential groove center along the tire reverse rotative direction, and preferably also axially inwardly from the circumferential groove center along the tire rotative direction, between the two circumferential groove ends intersected by the two adjacent transverse grooves, it is possible to apply an axially outward component of force to the water flowing along the circumferential grooves in the tire reverse rotative direction. Therefore, it is possible to effectively drain water from the tire tread not only in the tire circumferential direction but also in the tire transverse direction. The above-mentioned drainage effect is prominent, in particular when the vehicle is running at high speed in rainy weather.

The invention will be further described, by way of example only, with reference to the accompanying drawings, in which like reference numerals designate corresponding elements and in which:

Fig. 1 is a development view showing an example of a unidirectional herringbone tread pattern of a prior-art pneumatic tire;

Fig. 2(A) is a cross-sectional view taken along the line A-A in Fig. 1;

Fig. 2(B) is a similar cross-sectional view taken along the line B-B in Fig. 1;

Fig. 3 is an enlarged perspective view showing a circumferential groove formed on the tread surface of a pneumatic tire according to the present invention;

Fig. 4(A) is a cross-sectional view taken along the line A-A in Fig. 3; and

Fig. 4(B) is a cross-sectional view taken along the line B-B in Fig. 3.

The pneumatic tire provided with improved drainage performance according to the present invention will be described hereinbelow with reference to the accompanying drawings.

The feature of the present invention is to offset bottoms of substantially straight circumferential grooves axially outwardly along the tire reverse rotative direction, and preferably also axially inwardly along the tire rotative direction, from the groove center so that water on the tire tread is effectively drained not only in the tire circumferential direction but also in the tire transverse direction.

The present invention can be applied to any pneumatic tire formed with a unidirectional or herringbore tread pattern, having substantially straight circumferential grooves. An example of these tires has been already explained with reference to Fig. 1, in which the tread T is formed with a central circumferential groove 1-1, four parallel circumferential grooves 1-2R, 1-2L, 1-3R and 1-3L, and a number of inclined transverse grooves 2. Further, two middle ribs 3-1R and 3-1L, two intermediate block rows 3-2R and 3-2L, and two shoulder block rows 3-3R and 3-3L are formed symmetrical with respect to the central circumferential groove 1-1, between two of the circumferential grooves 1 or between the groove 1-3R, L and the tread end $e_R$, $e_L$, respectively.

The intersectional angle $\gamma$ between the circumferential grooves 1-2 and 1-3 and the transverse grooves 2 lies within an acute angular range of 30 to 85 degrees when seen toward the tire rotative direction as shown by an arrow in Fig. 1. Therefore, the tire tread T is brought into contact with the ground from the axially inner end portions of the transverse grooves 2 to the tread end portions of the same transverse grooves 2.

Further, the widths and the depths of the transverse grooves 2 are approximately equal to or less than those of the circumferential grooves 1.

Further, although the transverse grooves 2 stops in the middle ribs 3-1R and 3-1L respectively, there exists no problem even if the transverse grooves 2 extend into the central main circumferential groove 1-1 so as to form block rows.

Further, the structures of carcass, belts, sidewalls, etc. other than the tread are substantially the same as with the conventional tires and therefore. any detailed description of them is believed to be unnecessary.

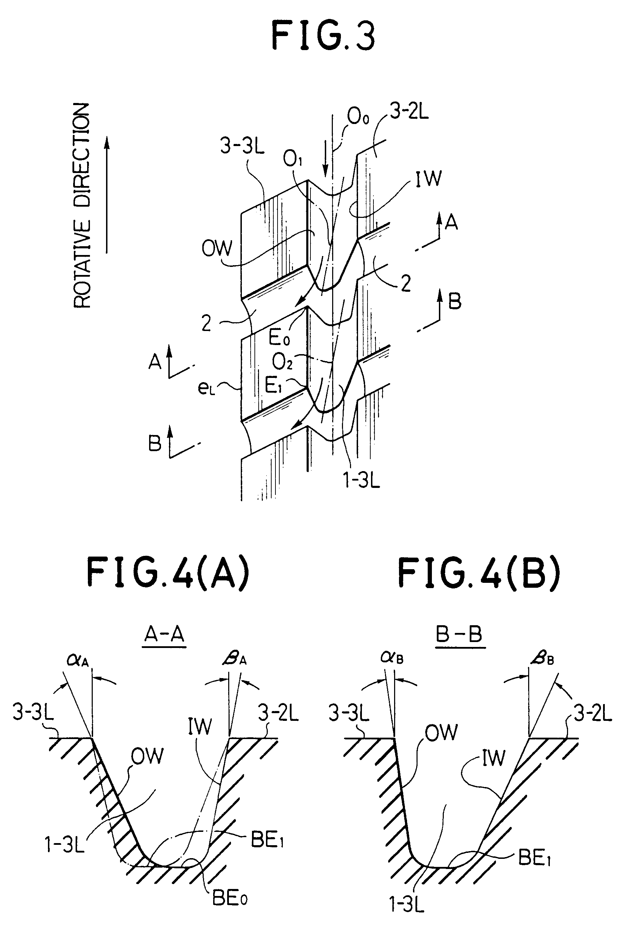

As depicted in Figs. 3 and 4(A) and (B), the bottom $BE_{\emptyset}$ of the substantially straight circumferential groove 1-3L is offset axially inwardly from the groove center at the circumferentially frontward groove end $E_{\emptyset}$ (earlier brought into contact with the ground) (Fig. 4(A)) and the bottom $BE_1$ of the same groove 1-3L is offset axially outwardly from the groove center at the circumferentially backward groove end $E_1$ (later brought into contact with the ground) (Fig. 4(B)). Therefore, the inclination angle or the downward slope angle $\alpha_A$ between the normal line of the tire tread and the axially outward side wall surface OW of the circumferential groove 1-3L at the circumferentially frontward groove end $E_{\emptyset}$ decreases gradually in the tire reverse rotative direction down to that $\alpha_B$ at the circumferentially backward groove end $E_1$ . In contrast with this, the inclination angle or the downward slope angle $\beta_A$ between the normal line of the tire tread and the axially inward side wall surface IW of the circumferential groove 1-3L at the circumferentially frontward groove end $E_{\emptyset}$ increases gradually in the same tire reverse rotative direction up to that $\beta_B$ at the circumferentially backward groove end $E_1$.

In summary, the angle $\alpha_A$ at the groove end $E_\emptyset$ is larger than that $\alpha_B$ at the groove end $E_1$, and the angle $\beta_A$ at the groove end $E_\emptyset$ is smaller than that $\beta_B$ at the groove end $E_1$. The difference in the inclination angle $\alpha$ or $\beta$ between the two groove ends $E_\emptyset$ and $E_1$ lies within a range of 5 to 30 degrees. It is preferable that the inclination angle $\alpha$ or $\beta$ decreases or increases gradually in the tire reverse rotative direction between the groove end $E_\emptyset$ and the groove end $E_1$ intersected by the two adjacent transverse grooves 2.

As described above, since the groove bottom $BE_\emptyset$ is offset inwardly at the groove end $E_\emptyset$ and the groove bottom $BE_1$ is offset outwardly at the groove end $E_1$, as depicted in Fig. 4(A) and (B), respectively, the actual central line $O_1$ of the circumferential groove 1-3L is offset axially outwardly from the apparent central line $O_\emptyset$ of the same circumferential groove 1-3L, so that water on the tire tread in contact with the ground first flows within the circumferential groove 1-3L along the curved arrows shown in Fig. 3 in the tire axially outward direction, secondly flows along the transverse grooves 2, and lastly is drained from the tread end $e_L$.

In other words, it is possible to consider that the circumferential groove 1-3L formed with the offset bottom applies an axially outward component of force to the water flowing along the circumferential groove 1-3L in the tire reverse rotative direction, so that the water on the tire tread is effectively drained not only in the tire circumferential direction but also in the tire transverse direction in order to enhance the drainage effect.

Further, in Fig. 4(A), the dot-dashed line indicates the cross section of the circumferential groove 1-3L shown in Fig. 4(B), which is superimposed upon Fig. 4(A). Fig. 4(A) clearly indicates that both the axially outward side wall surface OW and the axially inward side wall surface IW extend gradually in the tire axially outward direction from the groove end $E_\emptyset$ (Fig. 4(A)) to the groove end $E_1$ (Fig. 4(B)) along the tire reverse rotative direction, so that the water flowing along the groove 1-3L in the tire reverse rotative direction is automatically guided in the axially outward direction.

Without being limited thereto, however, it is also possible to obtain a similar drainage effect by offsetting only the groove bottom $BE_1$ axially outwardly at the groove end $E_1$ as shown in Fig. 4(B), without offsetting the groove bottom $BE_\emptyset$ at the groove end $E_\emptyset$ as shown in Fig. 2(A).

In the above description, the offset circumferential groove bottom is explained only of the left-side outwardly arranged circumferential groove 1-3L. However, the right-side outwardly arranged circumferential groove 1-3R is also formed in the same way in symmetrical positional relationship with respect to the central main circumferential groove 1-1. In addition, it is also preferable to offset the bottoms of the two left- and right-side inwardly arranged circumferential grooves 1-2L and 1-2R in the same way in order to further improve the drainage performance.

The drainage performance of the pneumatic tire according to the present invention has been verified by preparing the following test tires.

Invention tires

| | |
|---|---|
| Tire structure: | The same as conventional tire |
| Tire size: | 255/40 ZR 17 |
| Used Rim: | 9J-17 |
| Inflation pressure: | 2.5 kg/cm$^2$ |
| Tread pattern: | Same as shown in Fig. 1 |

Tread width: 200 mm
Width of circum. groove 1-1: 5 mm
Depth of main circum. groove 1-1: 8.5 mm
Width of other circum. groove 1-2 and 1-3: 13 mm
Depth of other circum. groove 1-2 and 1-3: 8.8 mm
Width of transverse grooves 2: 5 mm
Depth of transverse grooves 2: 8 mm
Inclination angle $\alpha_A$ at end $E_\emptyset$: 15°
Inclination angle $\alpha_B$ at end $E_1$: 5°
Inclination angle $\beta_A$ at end $E_\emptyset$: 5°
Inclination angle $\beta_B$ at end $E_1$: 15°

Comparative tires

Inclination angle: $\alpha_A = \alpha_B = \beta_A = \beta_B = 10°$
The same as Invention tires other than the above.

Test (Evaluation) method

Vehicles on which the above test tires are mounted under a tire load of 450 kg, respectively, were driven straight into a pool with a water depth of 10 mm in order to check vehicle speeds at which hydroplaining phenomenon occurred in dependence upon driver's feeling. The evaluation index of the invention tires is listed in a table below in comparison with the conventional tire with an index of 100.

| | Invention tires | Conventional tires |
|---|---|---|
| Drainage performance | 120 | 100 |

In the above table, the higher index implies the better drainage performance. Further, the above table indicates that the vehicle speed at which hydroplaining phenomenon occurs can be increased by about 20% by use of the invention tires as compared with the conventional tires.

As described above, in the pneumatic tire according to the present invention, since the bottoms of the circumferential grooves are offset axially outwardly along the tire reverse rotative direction and axially inwardly along the tire rotative direction, between the two circumferential groove ends intersected by the two adjacent transverse grooves, it is possible to apply an axially outward component of force to the water flowing along the circumferential groove in the tire reverse rotative direction, thus effectively draining the water from the tire tread not only in the tire circumferential direction but also in the tire transverse direction. The above-mentioned drainage performance is effective, in particular when the vehicle is running at high speed in a pool or along a rut on a speedway in rainy weather.

## Claims

1. A pneumatic tire having a unidirectional tread pattern formed with a plurality of substantially straight circumferential grooves and a plurality of transverse grooves (2) arranged so as to intersect the said circumferential grooves at an acute inclination angle to form a herringbone pattern along a tire rotative direction, characterized in that at least one said substantially straight circumferential groove (1-3L) is formed such that a bottom ($BE_1$) of said circumferential groove is offset axially outwardly from a central line of said circumferential groove along a tire reverse rotative direction, between two circumferential groove ends ($E_0$, $E_1$) intersected by two adjacent transverse grooves.

2. A pneumatic tire as claimed in claim 1, characterized in that the at least one said substantially straight circumferential groove is formed by further offsetting the bottom ($BE_0$) of said circumferential groove axially inwardly from the central line of said circumferential groove along the tire rotative direction, between the two circumferential groove ends intersected by the two adjacent transverse grooves.

3. A pneumatic tire as claimed in claim 2, characterized in that a first downward slope angle $\alpha$ between a normal line of a tread surface and an axially outward side wall surface of the circumferential groove decreases gradually and a second downward slope angle $\beta$ between the normal line of the tread surface and an axially inward side wall surface of the circumferential groove increases gradually, both in the tire reverse rotative direction, between the two circumferential groove ends intersected by the two adjacent transverse grooves.

4. A pneumatic tire as claimed in claim 3, characterized in that a difference ($\alpha_A-\alpha_B$) in the first downward slope angle $\alpha$ of the axially outward side wall surface of the circumferential groove between the two circumferential groove ends intersected by the two adjacent transverse grooves lies within a range of 5 to 30 degrees.

5. A pneumatic tire as claimed in claim 3, characterized in that a difference $(\beta_B-\beta_A)$ in the second downward slope angle $\beta$ of the axially inward side wall surface of the circumferential groove between the two circumferential groove ends intersected by the two adjacent transverse grooves lies within a range of 5 to 30 degrees.

## Patentansprüche

1. Luftreifen mit einem Ein-Richtungs-Laufstreifenmuster, das mit einer Vielzahl von geradlinigen Umfangsnuten und einer Vielzahl von Quernuten (2) gebildet ist, die so angeordnet sind, daß sie die Umfangsnuten mit einem spitzen Neigungswinkel schneiden und ein Fischgrätmuster längs einer Reifendrehrichtung bilden, dadurch gekennzeichnet, daß mindestens eine solche im wesentlichen geradlinige Umfangsnut (1-3L) so geformt ist, daß ein Nutgrund $(BE_1)$ der Umfangsnut von einer Mitellinie der Umfangsnut längs einer Reifenrückdrehrichtung zwischen zwei Umfangsnut-Enden $(E_0, E_1)$, die durch zwei benachbarte Quernuten geschnitten werden, axial nach außen versetzt wird.

2. Luftreifen nach Anspruch 1, dadurch gekennzeichnet, daß die besagte mindestens eine im wesentlichen geradlinige Umfangsnut dadurch gebildet ist, daß der Nutgrund $(BE_0)$ der Umfangsnut zwischen zwei Umfangsnut-Enden, die durch zwei benachbarte Quernuten geschnitten werden, von der Mittellinie der Umfangsnut längs einer Reifendrehrichtung axial weiter nach innen versetzt wird.

3. Luftreifen nach Anspruch 2, dadurch gekennzeichnet, daß ein erster abwärts geneigter Winkel $\alpha$ zwischen einer Senkrechten auf eine Laufstreifenfläche und einer axial äußeren Seitenwandfläche der Umfangsnut sich allmählich verringert und ein zweiter abwärts geneigter Winkel $\beta$ zwischen der Senkrechten auf die Laufstreifenfläche und einer axial inneren Seitenwandfläche der Umfangsnut allmählich anwächst, beides in der Reifen-Rückdrehrichtung zwischen den beiden Umfangsnut-Enden, die durch die beiden benachbarten Quernuten geschnitten werden.

4. Luftreifen nach Anspruch 3, dadurch gekennzeichnet, daß eine Differenz $(\alpha_A-\alpha_B)$ bei dem ersten abwärts geneigten Winkel $\alpha$ der axial äußeren Seitenwandfläche der Umfangsnut zwischen den beiden durch die beiden benachbarten Quernuten geschnittenen Umfangsnutenden innerhalb eines Bereiches von 5 bis 30° liegt.

5. Luftreifen nach Anspruch 3, dadurch gekennzeichnet, daß eine Differenz $(\beta_B-\beta_A)$ bei dem zweiten abwärts geneigten Winkel $\beta$ der axial inneren Seitenwandfläche der Umfangsnut zwischen den beiden durch die beiden benachbarten Quernuten geschnittenen Umfangsnut-Enden innerhalb eines Bereiches von 5 bis 30° liegt.

## Revendications

1. Pneumatique présentant un dessin unidirectionnel de bande de roulement avec une pluralité de rainures circonférentielles substantiellement rectilignes et une pluralité de rainures transversales (2) disposées de façon à intersecter lesdites rainures circonférentielles sous un angle d'inclinaison aigu pour former un dessin en chevrons dans le sens de la rotation du pneumatique, pneumatique caractérisé par le fait qu'au moins l'une (1-3L) desdites rainures circonférentielles substantiellement rectilignes est formée de façon qu'un fond $(BE_1)$ de ladite rainure circonférentielle se décale axialement vers l'extérieur, par rapport à la ligne centrale de ladite rainure circonférentielle, dans le sens inverse de la rotation du pneumatique, entre deux extrémités $(E_0, E_1)$ de la rainure circonférentielle intersectées par deux rainures transversales adjacentes.

2. Pneumatique selon la revendication 1,
caractérisé par le fait qu'au moins l'une desdites rainures circonférentielles substantiellement rectilignes est formée en décalant en outre le fond $(BE_0)$ de ladite rainure circonférentielle axialement vers l'intérieur, par rapport à la ligne centrale de ladite rainure circonférentielle, dans le sens de la rotation du pneumatique, entre les deux extrémités de la rainure circonférentielle intersectées par les deux rainures transversales adjacentes.

3. Pneumatique selon la revendication 2,

caractérisé par le fait qu'un premier angle de pente vers le bas $\alpha$, entre une ligne perpendiculaire à la surface de la bande de roulement et une surface de paroi latérale, axialement vers l'extérieur, de la rainure circonférentielle décroît graduellement et qu'un second angle de pente vers le bas $\beta$ , entre la ligne perpendiculaire à la surface de la bande de roulement et une surface de paroi latérale, axialement vers l'intérieur, de la rainure circonférentielle croit graduellement, l'un et l'autre dans le sens inverse de la rotation du pneumatique, entre les deux extrémités de la rainure circonférentielle intersectées par les deux rainures transversales adjacentes.

4.  Pneumatique selon la revendication 3,
    caractérisé par le fait que la différence ($\alpha_A$-$\alpha_B$) dans le premier angle de pente vers le bas $\alpha$ de la surface latérale, axialement vers l'extérieur, de la rainure circonférentielle, entre les deux extrémités de la rainure circonférentielle intersectées par les deux rainures transversales adjacentes, vaut entre 5 et 30 degrés.

5.  Pneumatique selon la revendication 3,
    caractérisé par le fait que la différence ($\beta_B$-$\beta_A$) dans le second angle de pente vers le bas $\beta$ de la surface de paroi latérale, axialement vers l'intérieur, de la rainure circonférentielle, entre les deux extrémités de la rainure circonférentielle intersectées par les deux rainures transversales adjacentes, vaut entre 5 et 30 degrés.

# FIG.1
## PRIOR ART

ROTATIVE DIRECTION

3-3L  3-2L  3-1L  3-1R T  3-2R  3-3R

$e_L$  $e_R$

$E_0$  A  A
B  B
$E_1$  γ  2

2  2

2

1-3L  1-2L  1-1  1-2R  1-3R

# FIG.2(A)
## PRIOR ART

3-3L  α  A-A  α  3-2L

OW  IW

$BE_0$  1-3L

# FIG.2(B)
## PRIOR ART

3-3L  α  B-B  α  3-2L

$BE_1$  1-3L

8

# FIG.3

# FIG.4(A)

# FIG.4(B)

A−A

B−B